(19) Europäisches Patentamt
European Patent Office
Office européen des brevets

(11) **EP 1 073 570 B1**

(12) **EUROPÄISCHE PATENTSCHRIFT**

(45) Veröffentlichungstag und Bekanntmachung des Hinweises auf die Patenterteilung:
**08.10.2003 Patentblatt 2003/41**

(51) Int Cl.7: **B60T 8/32**, B60T 7/12, B60T 13/72

(21) Anmeldenummer: **99920607.1**

(22) Anmeldetag: **07.04.1999**

(86) Internationale Anmeldenummer:
**PCT/EP99/02354**

(87) Internationale Veröffentlichungsnummer:
**WO 99/054179 (28.10.1999 Gazette 1999/43)**

(54) **VERFAHREN UND VORRICHTUNG ZUM VERKÜRZEN DES BREMSWEGES**

METHOD AND DEVICE FOR REDUCING BRAKING DISTANCE

PROCEDE ET DISPOSITIF POUR RACCOURCIR LA DISTANCE DE FREINAGE

(84) Benannte Vertragsstaaten:
**DE FR GB IT**

(30) Priorität: **18.04.1998 DE 19817326**

(43) Veröffentlichungstag der Anmeldung:
**07.02.2001 Patentblatt 2001/06**

(73) Patentinhaber: **Continental Teves AG & Co. OHG 60488 Frankfurt am Main (DE)**

(72) Erfinder:
• **ECKERT, Alfred**
  **D-55129 Mainz (DE)**
• **BERTHOLD, Thomas**
  **D-64293 Darmstadt (DE)**

• **TIELEMAN, Erwin**
  **NL-4571 CK Axel (NL)**

(56) Entgegenhaltungen:
EP-A- 0 616 932      EP-A- 0 965 507
DE-A- 4 310 354      DE-A- 4 418 270
DE-A- 19 503 622     DE-A- 19 524 939
DE-A- 19 526 659     DE-A- 19 607 048
DE-C- 4 028 290      DE-C- 4 208 496
DE-C- 4 413 172

• **PATENT ABSTRACTS OF JAPAN vol. 097, no. 010, 31. Oktober 1997 (1997-10-31) -& JP 09 142203 A (AISIN SEIKI CO LTD), 3. Juni 1997 (1997-06-03)**

**Beschreibung**

Die Erfindung betrifft ein Verfahren zum Verkürzen des Bremsweges nach dem Oberbegriff des Anspruchs 1. Die Erfindung betrifft ebenso eine Vorrichtung zur Durchführung des Verfahrens.

Ein Verfahren zum Verkürzen eines Bremsweges ist aus der DE 89 11 963 U1 bekannt, bei dem aufgrund von zwei vorliegenden Signalen eine Vorbremsung für eine Zeitdauer von ca. 0,5 s eingeleitet wird. Das erste Signal wird dabei ausgelöst, indem durch den Fahrzeugführer ein Schalter betätigt wird. Dieser Schalter ist so angeordnet, daß er entweder durch den linken Fuß oder durch eine Hand bedient wird, wobei im Falle der Bedienung durch die Hand der Schalter vorzugsweise so angebracht ist, daß die Hand nicht vom Lenkrad wegbewegt werden muß. Das zweite Signal wird ausgelöst, indem die Geschwindigkeit erfaßt wird, mit der der Fahrer den Fuß vom Gaspedal entfernt. Liegt diese Geschwindigkeit oberhalb eines bestimmten Schwellwertes, so wird die Vorbremsung automatisch eingeleitet.

Bei diesem bekannten Verfahren ist nachteilig, daß der Fahrer einen beim Führen eines Fahrzeuges ungewöhnlichen Bedienungsvorgang ausführen, nämlich mit dem linken Fuß bzw. mit einer Hand einen Schalter bedienen muß.

In der gattungsbildenden DE 40 28 290 C1 wird deshalb ein Verfahren vorgeschlagen, bei welchem automatisch ein größerer als sich aus der Bremspedalstellung ergebender Bremsdruck erzeugt wird, wenn die Betätigungsgeschwindigkeit, mit welcher das Bremspedal betätigt wird, einen vorbestimmten Wert überschreitet. Dies ist das einzige Kriterium zum Auslösen des automatischen Bremsvorganges. Dieses Verfahren ist gegenüber dem aus der DE 89 11 963 U1 bekannten Verfahren vorteilhaft, da der Fahrer bei einem Fahrzeug, das mit einem sogenannten einen automatischen Bremsvorgang auslösenden Bremsassistenten ausgerüstet ist, seine Verhaltensweise nicht speziell darauf einstellen muß, sondern die einzelnen Bedienelemente, insbesondere das Bremspedal, in der üblichen Art und Weise bedienen kann. Dennoch wird eine Paniksituation erkannt und ein entsprechend stärker verzögernder Bremsvorgang ausgeführt.

Dieses Verfahren hat sich in Paniksituationen bewährt, da der Bremsweg verkürzt und ein Unfall vermieden werden kann.

Bei diesem Verfahren wird zur maximalen Verkürzung des Bremsweges nach Auslösung des automatischen Bremsvorganges ein maximaler Bremsdruck mittels des Bremskraftverstärkers erzeugt. Der automatische Bremsvorgang wird beendet, wenn sich der am Bremspedal anliegende Bremspedaldruck verringert. Da jedoch der Bremskraftverstärker automatisch betätigt wird, kann sich der Bremspedaldruck selbsttätig verringern, da der Pedalwiderstand abnimmt. Hierdurch kann eine unbeabsichtigte Deaktivierung des automatischen Bremsvorganges verursacht werden. Der automatische Bremsvorgang kann deshalb beendet werden, ohne daß dies vom Fahrer des Fahrzeuges gewollt oder beabsichtigt ist.

Andererseits kann der automatische Bremsvorgang von einem auf eine sich ändernde Fahrsituation schnell reagierenden Fahrer unbeabsichtigt ausgelöst werden, wodurch eine maximale Verzögerung des Fahrzeuges erfolgt, ohne daß dies notwendig und gewünscht ist. Eine derart überraschende, unbeabsichtigt starke Bremsung kann in bestimmten Fahrsituationen, insbesondere bei dichtem Kollonnenverkehr, zu einer Störung des Verkehrsflusses führen, oder sogar einen Verkehrsunfall mit einem nachfolgendem Fahrzeug verursachen.

Dieses bekannte Verfahren zum Verkürzen des Bremsweges ist zwar vom Fahrer eines entsprechenden Fahrzeuges einfach in gewohnter Weise zu bedienen, kann jedoch in bestimmten Situationen zu einer unbeabsichtigten zu geringen oder zu starken Verzögerung des Fahrzeuges führen. Der Fahrer besitzt somit nicht immer die vollständige Kontrolle über sein Fahrzeug.

Für derartige Verfahren zum Verkürzen des Bremsweges geeignete Bremskraftverstärker, die sowohl mechanisch mittels einer Betätigungsstange als auch elektrisch mittels eines Elektromagneten angesteuert werden können, sind aus der DE 43 24 205 A1 und der DE 195 48 705 A1 bekannt.

In der EP 0 616 932 A1 ist ein Bremskraftverstärkersystem zum Regeln des Bremsdrucks beschrieben, bei dem eine auf ein Bremspedal einwirkende Bremskraft und der Anstieg der Bremskraft erfaßt wird und bei dem in Abhängigkeit davon die Bremskraftverstärkung durchgeführt wird, wobei insbesondere bei erkannter Gefahrensituation eine höhere Bremskraftverstärkung als bei gewöhnlichen Bremsungen eingestellt wird.

Nach der DE 195 03 622 A1 wird bei einer Bremsanlage für ein Fahrzeug bei betätigtem Hauptbremszylinder ein als "pneumatischer Motor" ausgebildeter Bremskraftverstärker in Gang gesetzt und durch eine Betätigung hydraulischer Ventile gelangt unter Druck stehende Bremsflüssigkeit vom Hautbremszylinder zur Einlaßseite einer Rückförderpumpe, um diese zu unterstützen, damit der Druckaufbau im Radbremszylinder schnell erfolgt. Somit fördert der Bremskraftverstärker Fluidvolumen aus dem Hauptbremszylinder zu einer Pumpe, damit diese schnell und ggf. unabhängig von der Betätigung des Bremspedals durch den Fahrer einen bestimmten Druck aufbauen kann.

Der Erfindung liegt die Aufgabe zugrunde, ein Verfahren und eine Vorrichtung zum Verkürzen eines Bremsweges zu schaffen, für das sich ein Fahrer eines Fahrzeuges in seinen Verhaltensweisen nicht umstellen muß, dennoch in allen Fahrsituationen eine geeignete Verzögerung des Fahrzeuges ausführt und dem Fahrer eine sichere Kontrolle über sein Fahrzeug auch während eines stärker verzögernden Bremsvorganges ermöglicht.

Die Aufgabe wird durch ein Verfahren mit den Merkmalen des Anspruchs 1 sowie eine Vorrichtung mit den Merkmalen des Anspruchs 21 gelöst. Vorteilhafte Ausgestaltungen der Erfindung sind in den Unteransprüchen angegeben.

Nach dem erfindungsgemäßen Verfahren wird ein Gefahrenpotential auf Grundlage vom einem Fahrergefahrenpotential $\Delta_{da}$ und von einem Fahrsituationgefahrenpotential $\Delta_{ds}$ ermittelt, das die Wahrscheinlichkeit angibt, daß das zu bremsende Fahrzeug in einen Unfall verwickelt wird. Nach Maßgabe des Gefahrenpotentials wird in einer Gefahrensituation der Verstärkungsfaktor des Bremskraftverstärkers erhöht.

Das erfindungsgemäße Verfahren unterscheidet sich somit von dem aus der DE 40 28 290 C1 bekannten Verfahren im wesentlichen dadurch, daß bei einem automatischen Bremsvorgang nicht eine maximale Verzögerung erfolgen muß, sondern die Verzögerung nach Maßgabe des Fahrergefahrenpotentials $\Delta_{da}$ und des Fahrsituationgefahrenpotentials $\Delta_{ds}$ unterschiedliche Werte annehmen kann, die bei geringerem Gefahrenpotential kleiner als bei größerem Gefahrenpotential sind. Hierdurch wird ein an die Fahrsituation angepaßter Bremsvorgang eingeleitet, der vom Fahrer wesentlich besser kontrollierbar ist, als eine schlagartig einsetzende maximale Verzögerung.

Die Erfinder der vorliegenden Erfindung bezeichnen eine ein erfindungsgemäßes Verfahren steuernde Vorrichtung als sogenannten "analogen Bremsassistent". Hierdurch soll zum Ausdruck gebracht werden, daß mit dem erfindungsgemäßen Verfahren in der Regel mit stufenlos variablen Verzögerungswerten gebremst wird, wohingegen das aus der DE 40 28 290 C1 bekannte Verfahren lediglich "digital" zwischen einer mechanisch gesteuerten Bremsung und einer automatischen Vollbremsung umschaltet.

Das erfindungsgemäße Verfahren wird anhand der beiliegenden Zeichnungen beispielhaft näher erläutert. Es zeigen:

Fig. 1        die Funktion zur Berechnung eines Fahrergefahrenpotentials $\Delta_{da}$,

Fig. 2        zwei aufeinanderfolgende Fahrzeuge zur Veranschaulichung der jeweiligen physikalischen Größen,

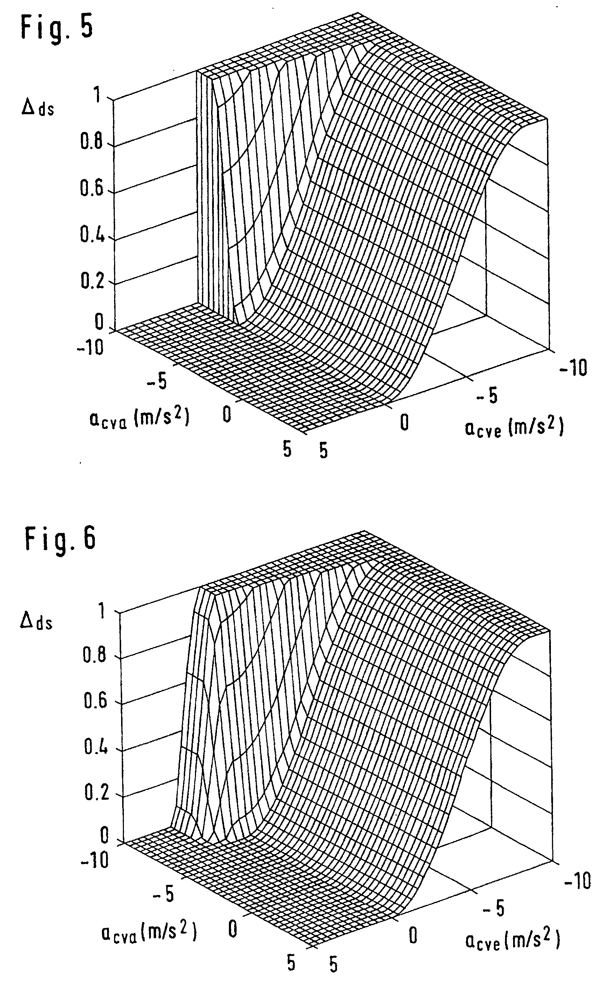

Fig. 3 bis 6    jeweils Funktionen zur Berechnung des Fahrsituationgefahrenpotential $\Delta_{ds}$,

Fig. 7        ein erstes Ausführungsbeispiel eines erfindungsgemäßen Verfahrens in einem Blockschaltbild,

Fig. 8        eine den Zusammenhang zwischen dem Verstärkungsfaktor $\Lambda$ und dem Fahrergefahrenpotential $\Delta_{da}$ zeigende Funktion,

Fig. 9        eine Abwandlung des ersten Ausführungsbeispiels des erfindungsgemäßen Verfahrens in einem Blockschaltbild,

Fig.10        ein zweites Ausführungsbeispiel eines erfindungsgemäßen Verfahrens in einem Blockschaltbild, und

Fig. 11       eine Abwandlung des zweiten Ausführungsbeispiels des erfindungsgemäßen. Verfahrens in einem Blockschaltbild.

Das erfindungsgemäße Verfahren zum Verkürzen des Bremsweges eines Fahrzeuges steuert einen Bremskraftverstärker an, wie er zum Beispiel aus der DE 195 48 705 A1 bekannt ist. Dieser Bremskraftverstärker kann unmittelbar mechanisch an einer Betätigungsstange betätigt werden, wobei auf die Betätigungsstange der auf das Bremspedal ausgeübte Bremspedaldruck $F_{ped}$ übertragen wird. Zusätzlich kann dieser Bremskraftverstärker auch elektrisch mittels eines Elektromagneten betätigt werden, um zum Beispiel in Gefahrensituationen den auf die einzelnen Bremselementen ausgeübten Bremsdruck zu erhöhen.

Zur elektrischen Ansteuerung des Bremskraftverstärkers ist eine elektrische Steuereinrichtung vorgesehen, die mit diversen Sensoren verbunden ist, um das erfindungsgemäße Verfahren zum Verkürzen des Bremsweges eines Fahrzeuges auszuführen.

Das Verfahren zum Verkürzen des Bremsweges eines Fahrzeuges arbeitet im normalen Fahrzustand in an sich bekannter Weise, wobei der Bremskraftverstärker lediglich mechanisch durch Betätigen der Betätigungsstange mittels des Bremspedals angesteuert wird. In kritischen Fahrsituationen wird der Bremskraftverstärker derart angesteuert, daß gegenüber einem bei einer rein mechanischen Betätigung des Bremskraftverstärkers vorliegendem Verstärkungsfaktor $\Lambda_0$ ein erhöhter Verstärkungsfaktor $\Lambda$ am Bremskraftverstärker durch eine elektrische Betätigung des Bremskraftverstärkers eingestellt wird-. Hierzu wird erfindungsgemäß ein Gefahrenpotential $\Delta$ ermittelt, das der Unfallgefahr entspricht, in welcher sich das zu bremsende Fahrzeug befindet.

Eine solche Unfallgefahr ist keine physikalische Größe und kann deshalb nicht direkt gemessen werden. Das Gefahrenpotential Δ ist vielmehr eine Wahrscheinlichkeit im mathematischen Sinne und nimmt deshalb Werte zwischen 0 (keine Unfallgefahr) und 1 (akute Unfallgefahr, Notsituation) an. Selbstverständlich kann das Gefahrenpotential Δ auch in einen anderen Zahlenbereich, zum Beispiel von 0 bis 100, skaliert werden. Für die nachfolgende Beschreibung wird von einem Zahlenbereich von 0 bis 1 für das Gefahrenpotential Δ ausgegangen. Wesentlich für die Erfindung ist, daß das Gefahrenpotential mehrere Werte annehmen kann und nicht lediglich zwischen zwei Zuständen unterscheidet, wie z.B. dem Vorliegen einer Unfallgefahr und dem nicht-Vorliegen einer Unfallgefahr.

Das Gefahrenpotential wird aus verfügbaren physikalischen Größen, die im wesentlichen auf der Betätigung des Bremssignals durch den Fahrer und der aktuellen Fahrsituation, in dem sich das zu bremsende Fahrzeug befindet, beruhen und statistischen Erfahrungswerten, wie z.B. der mittleren Reaktionszeit, abgeschätzt.

Es wird zwischen dem Fahrergefahrenpotential $\Delta_{da}$ - beruht auf den beim Betätigen der Bremse ermittelten Daten - und dem Fahrsituationgefahrenpotential $\Lambda_{ds}$ beruht auf den aus der Fahrsituation ermittelten Daten - unterschieden.

Ein Fahrer, der eine Gefahrensituation erkennt, betätigt die einzelnen Bedienelemente des Fahrzeuges zur Vermeidung eines Unfalles in einer charakteristischen Art und Weise. So wird er sehr schnell den rechten Fuß vom Gaspedal nehmen und das Bremspedal betätigen. Ferner sind schnelle, normalerweise nicht auftretende Lenkbewegungen möglich. Zur Ermittlung des Fahrergefahrenpotentials $\Delta_{da}$ können somit folgende physikalische Größen herangezogen werden:

- die Geschwindigkeit, mit welcher der Fuß vom Gaspedal entfernt wird,
- die Pedalwechseizeit, die der Fahrer zum Wechseln vom Gaspedal zum Bremspedal benötigt,
- der Bremspedalweg,
- die Bremspedalgeschwindigkeit,
- die Bremspedalkraft,
- die Bremspedalkraftänderung, und/oder
- die Lenkwinkeländerung.

Auf Grundlage dieser meßbaren Parameter kann das Fahrergefahrenpotential $\Delta_{da}$ abgeschätzt werden, wobei die Abschätzung auf einem einzigen der Parameter oder einer Kombination von mehreren Parametern beruhen kann. Die oben angegebenen Parameter sind keine abschließende Aufzählung, vielmehr können auch die an der Betätigungsstange des Bremskraftverstärkers anliegende Kraft, die proportional zur Bremspedalkraft $F_{ped}$ ist, oder der Weg $s_{mem}$ einer im Bremskraftverstärker angeordneten Membran und deren zeitliche Ableitungen, die dem Weg des Gaspedals bzw. dessen Änderung entsprechen, und dergleichen zur Ermittlung des Gefahrenpotentials herangezogen werden.

Bei Verwendung des Bremspedalweges oder einer dazu korrespondierenden Größe zur Ermittlung des Fahrergefahrenpotentials, ist zu berücksichtigen, daß bei Einsetzen der elektrischen Steuerung des Bremskraftverstärkers die Betätigungsstange des Bremskraftverstärkers und damit das Pedal automatisch betätigt werden, wodurch der Bremspedalweg alleine nicht mehr für eine objektiv gültige Abschätzung dienen kann. Ferner hat sich gezeigt, daß das Bremspedal oft mit großer Geschwindigkeit, aber nur für eine kurze Zeit und mit geringer Kraft betätigt wird. In einem solchen Fall ist die hohe Pedalgeschwindigkeit kein gültiger Indikator für ein Gefahrenpotential. Bei Verwendung der Pedalgeschwindigkeit als Indikator für das Fahrergefahrenpotential wird diese vorzugsweise mit einem anderen Parameter, wie zum Beispiel der Bremspedalkraft oder dem Bremspedalweg, kombiniert. Da der Bremspedalweg nicht kostengünstig gemessen werden kann, ist es daher zweckmäßig, die zum Bremspedalweg korrespondierende Verschiebung einer Membran $s_{mem}$ im Bremskraftverstärker als Indikator für das Fahrergefahrenpotential zu verwenden. Folglich kann als eine einfach meßbare und das Fahrergefahrenpotential realistisch abschätzende Meßgröße die Leistung $P = F_{ped} \cdot \dot{s}_{mem}$ verwendet werden.

Andere Parameter zur Bestimmung des Fahrergefahrenpotentials $\Delta_{da}$ können zum Beispiel $s_{mem} \cdot \dot{s}_{mem}$, $\dot{F}_{ped} \cdot s_{mem}$, $\dot{F}_{ped} \cdot F_{ped}$ oder $\dot{F}_{ped} \cdot s_{mem}$ sein. Zusätzlich oder alternativ können auch der Lenkwinkel und der Gaspedalweg und ihre Ableitungen in der Zeit verwendet werden.

Es ist auch möglich, eine Kombination von Parametern zu verwenden, mit

$$\Delta_{da} = \sum_{i=1}^{n} |Parameter_i| \cdot g_i$$

wobei $g_i$ einen Gewichtungsfaktor für den jeweiligen Parameter i darstellt.

Ferner kann eine Fehleridentifikation durch einen Vergleich der Pedalkraft mit dem Pedalweg oder Membranweg oder dem im Bremskraftverstärker aufgebauten Druck oder durch Vergleichen des Membranweges mit dem im Bremskraftverstärker aufgebauten Druck erfolgen. Für das verfahren wird deshalb eine Sensorkonfiguration mit einem Drucksensor und einem Kraftsensor bevorzugt, denn hierdurch wird auf kostengünstige Weise eine Lösung mit Fehleridentifikation geschaffen.

Anstelle der vom Fahrer ausgeführten Betätigungsvorgänge können grundsätzlich auch die physischen Zustände des Fahrers selbst, wie zum Beispiel sein Herzrhythmus, Augenbewegungen und dergleichen zur Ermittlung einer Gefahrensituation verwendet werden. Falls diese Parameter mit berührungslos arbeitenden Sensoren erfaßbar sind, können sie eine praktische Bedeutung erlangen.

Ferner kann das Fahrergefahrenpotential ($\Delta_{da}$) nach folgender Formel berechnet werden:

$$\Delta_{da} = \cos\left(\frac{\dot{F}_{ped}}{\dot{F}_{ped-panic}}\right)$$

wobei $\dot{F}_{ped-panic}$ der für Gefahrensituationen typischen Bremspedalkraftänderung ($\dot{F}_{ped}$) entspricht und $\Delta_{da}=1$ gilt, falls die Bremspedalkraftänderung ($\dot{F}_{ped}$) größer als $\dot{F}_{ped-panic}$ ist, und $\Delta_{da}=0$ gilt, falls $\dot{F}_{ped}$ kleiner 0 ist.

Nachfolgend wird ein Ausführungsbeispiel zur Ermittlung des Fahrergefahrenpotentials $\Delta_{da}$ beschrieben, wobei das Fahrergefahrenpotential $\Delta_{da}$ aus der Bremspedalkraftänderung $F_{ped}$ ermittelt wird. Es hat sich nämlich gezeigt, daß in normalen Fahrsituationen Bremspedalkraftänderungen bis zu 200 N/s vom Fahrer ausgeübt werden, wohingegen in Gefahrensituationen die Bremspedalkraftänderungen Werte bis zu 1500 N/s oder mehr annehmen können. Diese Werte hängen stark vom Fahrer ab, wobei einige Fahrer in Gefahrensituationen Bremspedalkraftänderungen bis zu 8000 N/s ausüben können. Da es wahrscheinlicher ist, daß Leute mit geringerer Bremspedalkraftänderung nicht ausreichend stark bremsen, ist es zweckmäßig, das Fahrergefahrenpotential $\Delta_{da}$ für eine Bremspedalkraftänderung von 1500 N/s gleich 1 zu setzen ($\Delta_{da}$ = 1). Für eine negative Bremspedalkraftänderung wird das Fahrergefahrenpotential $\Delta_{da}$ gleich 0 gesetzt. Zwischen den Werten 0 bis 1500 N/s nimmt das Fahrergefahrenpotential $\Delta_{da}$ von 0 bis 1 zu. Für diesen Übergang wird vorzugsweise eine Cosinus-Funktion gewählt, da sie stetige Übergänge im Bereich einer Bremspedalkraftänderung $F_{ped}$ = 0 N/s und bei $F_{ped}$ = 1500 N/s aufweist. Für $\Delta_{da}$ gilt somit:

$$\Delta_{da} = \frac{1}{2} \cdot \left\{ 1 - \cos\left( \pi \cdot \min\left( \max\left( \frac{\dot{F}_{ped}}{1500}, 0 \right), 1 \right) \right) \right\}$$

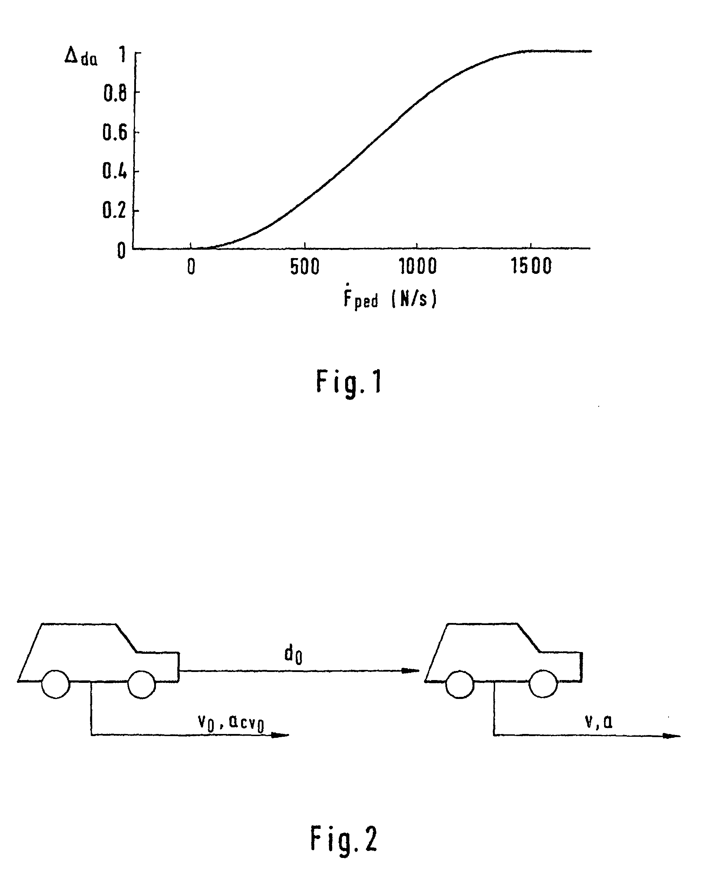

Der Verlauf dieser Funktion ist in Fig. 1 gezeigt.

Das Fahrsituationgefahrenpotential $\Delta_{ds}$ wird hingegen aus einigen der folgenden die Fahrsituation beschreibenden Parametern abgeschätzt: der Fahrzeuggeschwindigkeit $v_0$ des zu bremsenden Fahrzeuges, der Fahrzeugbeschleunigung $a_0$, dem Abstand $d_0$ zu einem vorausfahrenden Fahrzeug, der Relativgeschwindigkeit $\dot{d}_0$ bezüglich des vorausfahrenden Fahrzeuges und der Relativbeschleunigung $\ddot{d}_0$ bezüglich des vorausfahrenden Fahrzeuges (siehe Fig. 2).

Als weiterer Parameter kann eine Radschlupfinformation, die von einem intelligenten Bremssystem ermittelt werden kann, berücksichtigt werden.

Aus dem Abstand $d_0$ und seiner zeitlichen Ableitungen kann ein theoretischer Kollisionszeitpunkt $t_c$ bestimmt werden, nachdem die beiden Fahrzeuge bei gleichbleibender Geschwindigkeit und gleichbleibender Beschleunigung kollidieren würden. Für $d_0 < 0$ und $\ddot{d}_0 = 0$ gilt:

$$t_c = -\frac{d_0}{\dot{d}_0}$$

Falls $\ddot{d}_0 \neq 0$ ist, gilt:

$$t_c = -\frac{-\dot{d}_0 - \sqrt{\dot{d}_0^2 - 2d_0\ddot{d}_0}}{\ddot{d}_0}$$

Falls tc negativ oder komplex sein sollte, tritt keine Kollision auf und $t_c$ wird unendlich gesetzt.

Falls jedoch bei gleichbleibender Geschwindigkeit und gleichbleibender Beschleunigung eine Kollision auftreten würde, muß das Fahrzeug verzögert werden. Hierbei ist die Reaktionszeit $t_R$ zu berücksichtigen. Die Reaktionszeit $t_R$ ist statistisch genau erfaßt worden und beträgt im Mittel 1,34s, wobei sie sich aus folgenden Komponenten zusammensetzt:

- Erkennen der Gefahrensituation bzw. des Objektes (0,48s),
- Reaktionsgrundzeit, während der neuronale Vorgänge entsprechende Körperreaktionen auslösen (0,45s),
- Bewegungszeitintervall zum Bewegen des Fußes vom Gaszum Bremspedal (0,19s),
- der Aufbau des Bremsdruckes vom Zeitpunkt der Berührung des Bremspedals (0,05 s),
- und Fortpflanzung des Bremsdruckes zu den einzelnen Bremselementen (0,17s).

Falls $t_c < t_R$ gilt, kann ein Unfall nicht mehr verhindert werden. Falls $t_c \geq t_R$ gilt, wird eine Beschleunigung $a_{cva}$ für das zu bremsende Fahrzeug berechnet, die die maximal erlaubte Beschleunigung (oder minimal notwendige Verzögerung) bei Vermeidung eines Unfalles angibt. Diese maximal erlaubte Beschleunigung $a_{cva}$ kann mit folgender Formel berechnet werden:

$$a_{cva} = -\frac{1}{2} \frac{(v_0 + a_{cv0}t_R)^2}{d_0 - v_0 t_R - \frac{1}{2}a_{cv0}t_R^2 - \frac{1}{2}\frac{(v_0 + \dot{d}_0)^2}{a_{cv0} + \ddot{d}_0}}.$$

Die berechnete Beschleunigung ist die maximal erlaubte Beschleunigung nach der Reaktionszeit $t_R$. Jedoch kann der Fahrer bereits mit der tatsächlichen Beschleunigung $a_{cv0}$ bremsen, so daß keine weitere Verzögerung notwendig ist. Würde man dann das Fahrsituationgefahrenpotential $\Delta_{ds}$ alleine auf Grundlage der maximal erlaubten Beschleunigung ermitteln, könnte dies zu einer unnötigen zusätzlichen Verzögerung führen. Daher ist es zweckmäßig, die Differenz $a_{cve}$ zwischen der maximal erlaubten Beschleunigung $a_{cva}$ und der tatsächlichen Beschleunigung $a_{cv0}$ als Grundlage zur Ermittlung des Fahrsituationgefahrenpotential $\Delta_{ds}$ zu verwenden ($a_{cve} = a_{cva} - a_{cv0}$).

Dies ist die zusätzliche Verzögerung, die der Fahrer nach Ablauf der Reaktionszeit tR erzielen muß. Da eine größere Verzögerung als 0,9 g in der Regel nicht erzielt werden kann, wird $\Delta = 1$ für $a_{cve} = 0,9$ g gesetzt.

Für $a_{cve} \geq 0$ ist die Gefahr eines Unfalles gering, so daß $\Delta = 0$ für $a_{cve} \geq 0$ gesetzt werden kann. Dies bedeutet, daß bei einer Beschleunigung des Fahrzeuges von zum Beispiel 0,2 g, $\Delta$ gleich 1 sein würde, wenn die notwendige Verzögerung 0,7 g ist, da dann $a_{cve}$ -0,9 g betragen würde.

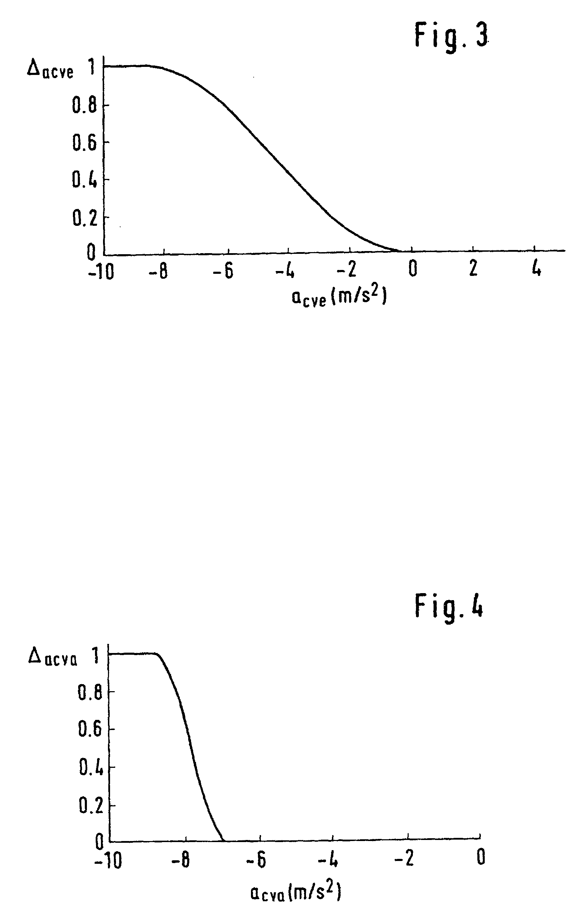

Verzögerungen zwischen 0 bis 0,3 g sind im täglichen Verkehr üblich und können leicht erzielt werden. In diesem Bereich sollte das Fahrsituationgefahrenpotential $\Delta_{ds}$ nicht stark von 0 abweichen. Verzögerungen im Bereich von 0,6 g bis 0,9 g sind seltener. Deshalb sollte das Fahrsituationgefahrenpotential $\Delta_{ds}$ in diesem Bereich etwa 1 betragen. Im Bereich zwischen 0,3 g und 0,6 g sollte $\Delta_{ds}$ von 0 bis 1 ansteigen. Eine Funktion, die diesen Anforderungen genügt, ist in Fig. 3 gezeigt und durch folgende Formel gegeben:

$$\Delta_{acve}(a_{cve}) = \frac{1}{2} \cdot \left\{ 1 - \cos\left( \pi \cdot \min\left( -\min\left( \frac{a_{cve}}{0,9 \cdot g}, 0 \right), 1 \right) \right) \right\}$$

Für zum Beispiel $a_{cva}$ = -0,9 g und $a_{cv0}$ = -0,7 g gibt $\Delta_{acve}$ ein geringes Fahrsituationgefahrenpotential $\Delta_{ds}$ an. Da jedoch eine Verzögerung von 0,9 g eine sehr große Verzögerung ist, die nahe an den physikalischen Grenzen der Reibungskraft zwischen Rädern und Straße liegt, besteht,eine erhebliche Unfallgefahr. Jede kleine Änderung im Straßenzustand oder der Bewegung des Fahrzeuges kann eine Verzögerung erfordern, die größer als die physikalische mögliche Verzögerung ist. Deswegen sollte das Fahrzeug schnell in einen Fahrzustand überführt werden, in dem eine geringere Verzögerung notwendig ist. Daher ist es zweckmäßig, daß das Fahrsituationgefahrenpotential $\Delta_{ds}$ auch direkt von $a_{cva}$ abhängt. Ein Gefahrenpotential $\Delta_{acva}$ (Fig. 4) wird z.B. gleich 1 für den Bereich einer maximal möglichen Verzögerung $a_m$ und gleich 0 für eine Verzögerung $a_0$ gesetzt, die 0,2 g kleiner als $a_m$ ist.

$$\Delta_{acva}(a_{cva}) = \frac{1}{2} \cdot \left\{ 1 - \cos\left( \pi \cdot \min\left( \left( \frac{a_{cva} - a_0}{a_0 - a_m} \right), 0 \right), 1 \right) \right\}$$

Das gesamte Fahrsituationgefahrenpotential $\Delta_{ds}$ sollte zumindest so groß wie das Maximum von $\Delta_{acva}$ und $\Delta_{acve}$ sein. Falls $\Delta_{acva}$ und $\Delta_{acve}$ größer als 0 sind, ist die tatsächliche Gefahr größer als dies die einzelnen Werte zum Ausdruck bringen, denn sie beruhen auf zwei unterschiedlichen Gefahrenquellen, da $\Delta_{acva}$ einen begrenzte Haftung zwischen Straße und Rad für die erforderliche Beschleunigung anzeigt, wohingegen $\Delta_{acve}$ angibt, daß die notwendige Verzögerung nicht erreicht werden kann. Daher wird als Fahrsituationgefahrenpotential $\Delta_{ds}$ vorzugsweise die Summe aus $\Delta_{acve}$ und $\Delta_{acva}$ verwendet, falls $a_{cve}$ kleiner als 0 ist:

$$\Delta_{ds} = (a_{cve}, a_{cva}) = \min(1, \Delta_{acve} + \Delta_{acva})$$

Zur Vermeidung einer ruckartigen Bremsmomentenänderung und um die Übergänge bei $a_{acve}$ gleich 0 für $a_{cva}$ kleiner $a_0$ abzurunden, wird $\Delta_{ds}$ für $a_{acve} < 0$ und $a_{acva} < a_0$ wie folgt definiert: mit

$$\Delta_{ds}(a_{cve}, a_{cva}) = \Delta_e \cdot \Delta_a$$

$$\Delta_e = \frac{1}{2} \cdot \left\{ 1 - \cos\left( \pi \cdot \min\left( -\min\left( \frac{a_{cve} - (a_0 - a_m)}{a_0 - a_m}, 0 \right), 1 \right) \right) \right\}$$

und

$$\Delta_a = \frac{1}{2} \cdot \left\{ 1 - \cos\left( \pi \cdot \min\left( -\min\left( \frac{a_{cva} - a_1}{a_1 - a_m}, 0 \right), 1 \right) \right) \right\}$$

$$a_1 = a_m + \sqrt{(a_0 - a_m)^2 - a_{cve}^2}$$

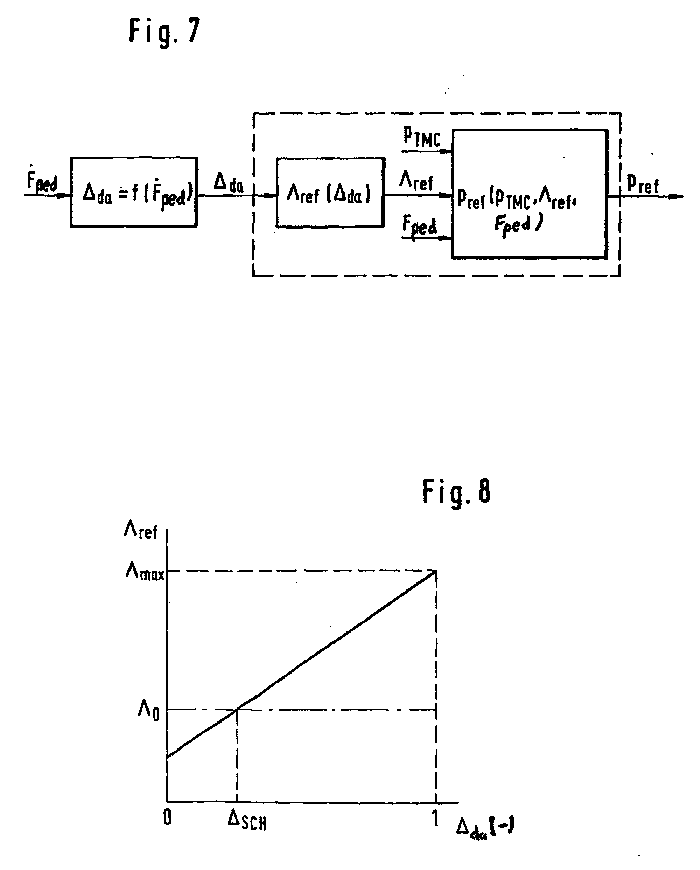

$\Delta_{ds}$ ist somit eine Funktion von $a_{cve}$ und $a_{cva}$ (Fig. 6), die beide im Bereich von -1 g bis 0,5 g liegen.

Mit dem derart erhaltenen Fahrsituation- und Fahrergefahrenpotential $\Delta_{ds}$ bzw. $\Delta_{da}$ kann die Verzögerung während eines Bremsvorganges an die tatsächlichen Gefahrenverhältnisse angepaßt werden. Das Bremsverhalten der Bremse sollte jedoch so eingestellt sein, daß es immer von dem Fahrer vorhersehbar ist und er jederzeit das Gefühl der vollständigen Kontrolle über seine Bremse besitzt. Daher sollte eine Erhöhung des Bremsdruckes nur erfolgen, wenn das Bremspedal betätigt wird. Bei stillstehendem Bremspedal soll der Bremsdruck deshalb nicht selbständig erhöht werden, selbst wenn das Gefahrenpotential $\Delta$ gleich 1 sein sollte.

Nachfolgend wird anhand von dem in Fig. 7 gezeigten Blockschaltbild und dem in Fig. 8 gezeigten Funktionsverlauf ein erstes Ausführungsbeispiel einer statischen Bremsadaption erläutert, die die vorgenannten Zielvorgaben erfüllt.

Zunächst wird ein Fahrergefahrenpotential $\Delta_{da}$ in der oben beschriebenen Weise aus der Pedal kraftänderung $F_{ped}$ berechnet. Aus dem Fahrergefahrenpotential $\Delta_{da}$ wird ein Sollwertverstärkungsfaktor $\Lambda_{ref}$ berechnet. Ist das Fah-

rergefahrenpotential $\Delta_{da}$ kleiner als ein Schwellwert, von z.B. 0,25, so ist der . Sollwertverstärkungsfaktor $\Lambda_{ref}$ kleiner als der Standardverstärkungsfaktor $\Lambda_0$ des Bremskraftverstärkers bei mechanischer Betätigung seiner Betätigungsstange. In diesem Bereich unterhalb des Schwellwertes wird der Bremsvorgang alleine durch die mechanische Betätigung der Betätigungsstange ausgeführt.

Wenn das Fahrergefahrenpotential $\Delta_{da}$ den Schwellwert überschreitet, setzt bei Betätigung der Bremse die automatische Bremsadaption ein, wobei mit zunehmendem Fahrergefahrenpotential $\Delta_{da}$ der Sollwertverstärkungsfaktor $\Lambda_{ref}$ proportional zum Gefahrenpotential $\Delta$ erhöht wird. Es ist zweckmäßig, wenn der adaptierte Sollwertverstärkungsfaktor $\Lambda_{ref}$ im Bereich des Schwellwertes $\Lambda_{SCH}$ dem Standardverstärkungsfaktor $\Lambda_0$ entspricht, so daß bei geringem Gefahrenpotential keine zu starke, sondern eine der jeweiligen Gefahrensifuation angepaßte automatische Veränderung des Verstärkungsfaktors $\Lambda$ erfolgt, die ein vom Fahrer gut kontrollierbares Bremsverhalten erzeugt.

Wie in Fig. 7 gezeigt, wird aus dem Sollwertverstärkungsfaktor $\Lambda_{ref}$, der Pedalkraft $F_{ped}$ und dem im Bremskraftverstärker vorliegendem Druck $P_{TMC}$ ein Solldruck $P_{ref}$ ermittelt, auf den der Druck des Bremskraftverstärkers $P_{TMC}$ eingestellt wird. Mit der Berücksichtigung der Pedalstellung bzw. der korrespondierenden Pedalkraft $F_{ped}$ wird sichergestellt, daß der Druck im Bremskraftverstärker nur erhöht wird, wenn ein entsprechendes Betätigungssignal am Bremspedal erzeugt wird.

Da während eines Bremsvorganges sich die Bremseigenschaften nicht verändern, zumindest nicht vermindern sollten, wird in einer bevorzugten Ausführungsform ein einmal eingenommener Sollwertverstärkungsfaktor $\Lambda_{ref}$ solange nicht vermindert, bis die Betätigung der Bremse beendet wird, d.h., der Fuß vom Bremspedal genommen wird.

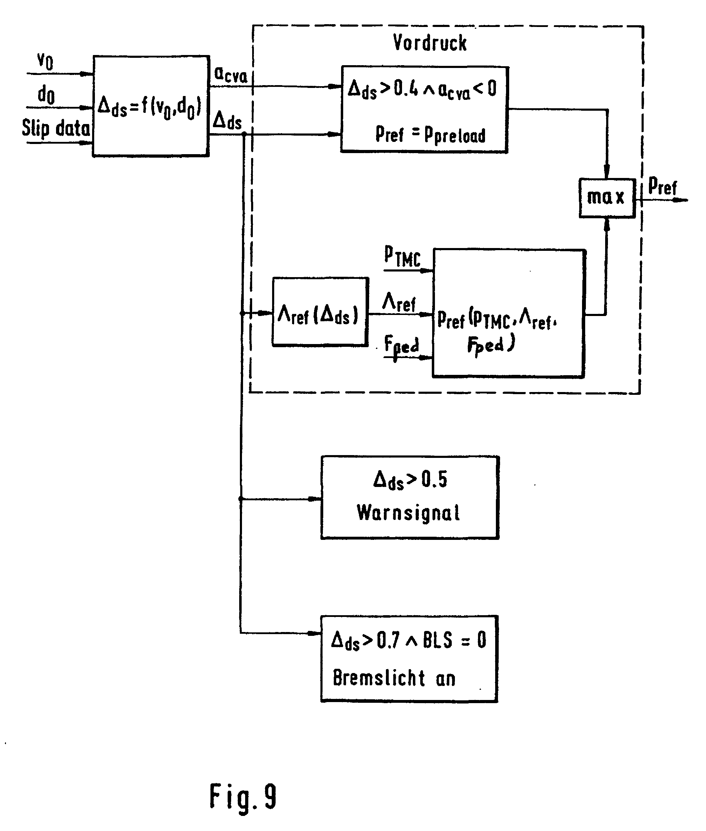

Fig. 9 zeigt ein weiteres Blockschaltbild eines Ausführungsbeispiels, das eine statische Bremsadaption ausführt. Hierbei wird das Fahrsituationgefahrenpotential $\Delta_{ds}$ gemäß dem oben beschriebenen Fahrsituationgefahrenpotential $\Delta_{ds}$ ermittelt. Ist das Fahrsituationgefahrenpotential $\Delta_{ds}$ größer als ein vorbestimmter Vordruckschwellwert, von z.B. 0,4, und die maximal erlaubte Beschleunigung $a_{cva}$ kleiner als 0, so wird eine Vordruckfunktion aktiviert, die den Solldruck $P_{ref}$ auf einen bestimmten Vordruck $P_{preload}$ einstellt, der so groß bemessen ist, daß sich in den Bremsleitungen ein Bremsdruck aufbaut, der gerade nicht zur Betätigung der Bremsen genügt. Hierdurch muß bei einer späteren, zu erwartenden Betätigung der Bremse der Druck in den Bremsleitungen nicht mehr aufgebaut werden, wodurch die Bremsen in einer solchen Gefahrensituation schneller ansprechen.

Der Solldruck $P_{ref}$ wird in gleicher Weise wie bei dem oben anhand von Fig. 7 beschriebenen Ausführungsbeispiel ermittelt, wobei bei aktiver Vordruckfunktion der größere der beiden ermittelten Solldrücke $P_{ref}$ als Solldruck $P_{ref}$ zur Ansteuerung es Bremskraftverstärkers verwendet wird.

Ist das Fahrsituationgefahrenpotential $\Delta_{ds}$ größer als ein vorbestimmter Warnsignalschwellwert, der im vorliegendem Ausführungsbeispiel auf 0,5 eingestellt ist, so wird im Fahrgastraum ein Warnsignal ausgegeben, das den Fahrer vor der Gefahrensituation warnt.

Überschreitet das Fahrsituationgefahrenpotential $\Delta_{ds}$ einen Verkehrwarnsignalschwellwert, der vorzugsweise größer als der Warnsignalschwellwert ist, und im vorliegenden Ausführungsbeispiel auf 0,7 eingestellt ist, so werden die Bremslichter zur Warnung der nachfolgenden Fahrzeuge eingeschaltet. Zur Unterscheidung gegenüber einer üblichen Bremsung können die Bremslichter blinkend eingeschaltet oder ein anderes Warnsignal ausgegeben werden, so daß dem nachkommenden Verkehr eindeutig die Gefahrensituation mitgeteilt wird und ein entsprechender Sicherheitsabstand eingehalten werden kann.

Die Bestimmung des Fahrsituationgefahrenpotentials $\Delta_{ds}$ kann somit in Kombination mit der Bremsadaption, aber auch unabhängig davon zur Warnung des Fahrers und/oder des Verkehrs verwendet werden, wodurch eine Präventivmaßnahme zur Vermeidung von Unfällen geschaffen wird.

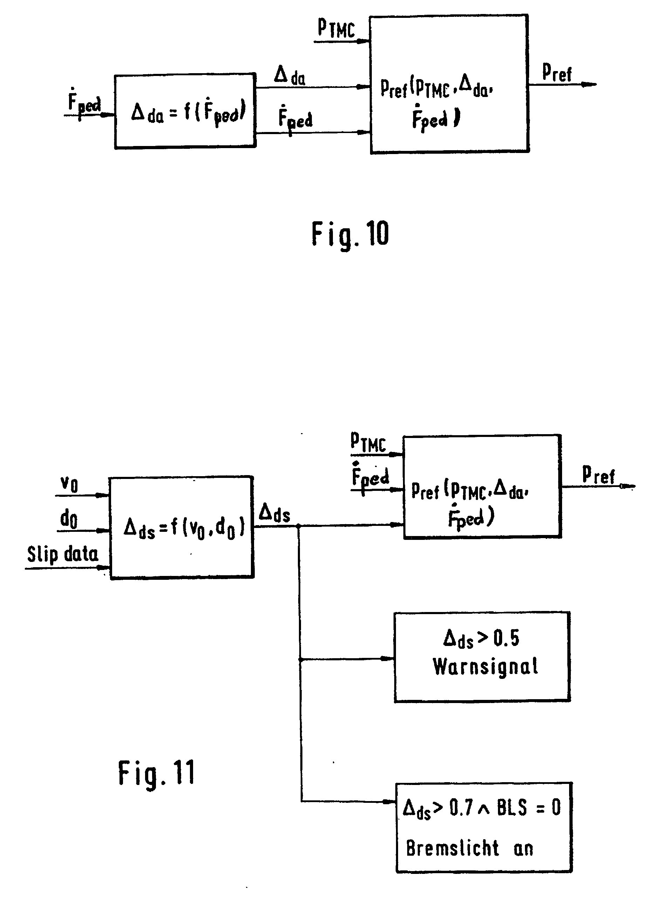

Anhand von Fig. 10 wird ein weiteres Ausführungsbeispiel mit einer dynamischen Bremsadaption erläutert.

Die Ermittlung des Fahrsituationgefahrenpotentials $\Delta_{ds}$ erfolgt in der oben angegebenen Art und Weise. Aus dem Fahrsituationgefahrenpotential $\Delta_{ds}$ wird jedoch kein Sollwertverstärkungsfaktor $\Lambda_{ref}$ berechnet, sondern der Solldruck $P_{ref}$ wird unmittelbar in Abhängigkeit einer Änderung (= 1. zeitl. Ableitung) der Bremspedalstellung, des Bremsdruckes oder dgl. berechnet, so daß mit z.B. zunehmenden Bremspedaldruck der. Solldruck $P_{ref}$ dynamisch zunimmt. Wesentlich ist hierbei, daß zur Bestimmung des Solldruckes $P_{ref}$ die erste zeitliche Ableitung einer physikalischen Größe verwendet wird, die mit der durch den Fahrer erfolgten Pedalbetätigung im Zusammenhang steht, so daß eine Änderung der Pedalbetätigung eine dynamische Erhöhung oder Verminderung des Bremsdruckes bewirkt.

In Fig. 11 ist ein weiteres Ausführungsbeispiel der Erfindung mit einer dynamischen Bremsadaption gezeigt, das mit den oben beschriebenen zusätzlichen Funktionen zur Abgabe eines Warnsignals bzw. zum Einschalten der Bremslichter versehen ist.

Das Gefahrenpotential wird aus einer Kombination aus dem Fahrergefahrenpotential $\Delta_{da}$ und dem Fahrsituationgefahrenpotential $\Delta_{ds}$ berechnet.

Der Erfolg der Erfindung beruht im wesentlichen auf der Auswertung aktueller physikalischer Parameter in Kombination mit statistischen Erfahrungswerten, die ein sinnvolle Abschätzung des Gefahrenpotentials erlauben. Die Erfindung kann daher durch Einbeziehung diverser statistischer Ergebnisse, insbesondere einer in einem elektronischen Speicher abgespeicherten Auswertung einer Unfallstatistik, abgewandelt werden. Diese Unfallstatistik wird ähnlich wie bei den von Zündvorrichtungen bekannten Kennfeldern in Abhängigkeit von vorbestimmten Parametern, wie Geschwindigkeit, Beschleunigung, Betätigung des Bremspedals, usw. abgerufen.

**Patentansprüche**

1. Verfahren zum Verkürzen des Bremsweges eines Fahrzeuges, das einen Bremskraftverstärker aufweist, der während eines Standardbremsvorganges lediglich durch einen vom Fahrer ausgeübten Bremspedaldruck angesteuert wird und bei dem ein Gefahrenpotential ($\Delta$) ermittelt wird, das die Wahrscheinlichkeit angibt, daß das zu bremsende Fahrzeug in einen Unfall verwickelt wird,
   **dadurch gekennzeichnet, daß** der Bremskraftverstärker beim Vorliegen einer kritischen Fahrsituation von einer Steuereinrichtung derart angesteuert wird, daß ein gegenüber dem Standardbremsvorgang erhöhter Verstärkungsfaktor ($\Lambda$) am Bremskraftverstärker eingestellt wird und daß die Erhöhung des Verstärkungsfaktors ($\Lambda$) nach Maßgabe des Gefahrenpotentials ($\Delta$) gesteuert wird, das auf. Grundlage von einem Fahrergefahrenpotential ($\Delta_{da}$) und von einem Fahrsituationgefahrenpotential ($\Delta_{ds}$) ermittelt wird, wobei zur Ermittlung des Fahrergefahrenpotentials ($\Delta_{da}$) wenigstens einer der folgenden vom Fahrer beeinflußbaren Parameter verwendet wird :

   - der Gaspedalweg,
   - die Geschwindigkeit, mit welcher ein Fuß vom Gaspedal entfernt wird,
   - die Pedalwechselzeit, die zum Wechseln vom Gaspedal zum Bremspedal benötigt wird,
   - der Bremspedalweg,
   - die Bremspedalgeschwindigkeit,
   - der Membranweg ($s_{mem}$) einer im Bremskraftverstärker angeordneten Membran und/oder dessen Ableitungen in der Zeit ($\dot{s}_{mem}$),
   - die an der Betätigungsstange des Bremskraftuerstärkers anliegende Kraft und/oder deren Ableitung in der Zeit,
   - die Bremspedalkraft ($F_{ped}$),
   - die Bremspedalkraftänderung ($\dot{F}_{ped}$),
   - die Lenkwinkeländerung, und/oder
   - physische Zustände des Fahrers, wie Herzrhytmus und Augenbewegungen,

   und wobei zur Ermittlung des
   Fahrsituationgefahrenpotential ($\Delta_{ds}$) wenigstens einer der folgenden von einer Fahrsituation bestimmten Parameter verwendet wird:

   - die Fahrzeuggeschwindigkeit ($v_0$),
   - die Fahrzeugbeschleunigung ($a_0$),
   - den Abstand ($d_0$) zu einem vorausfahrenden Fahrzeug,
   - die Relativgeschwindigkeit ($\dot{d}_0$) bzgl. eines vorausfahrenden Fahrzeuges,
   - die Relativbeschleunigung ($\ddot{d}_0$) bzgl. eines vorausfahrenden Fahrzeuges, und/oder
   - Radschlupfinformationen.

2. Verfahren nach Anspruch 1,
   **dadurch gekennzeichnet, daß** lediglich über einem bestimmten Schwellwert ($\Delta_{SCH}$) des Gefahrenpotentials ($\Delta$) der Verstärkungsfaktor ($\Lambda$) von der Steuereinrichtung erhöht wird.

3. Verfahren nach Anspruch 2,
   **dadurch gekennzeichnet, daß** der von der Steuereinrichtung erhöhte Verstärkungsfaktor ($\Lambda$) im Bereich des Schwellwertes ($\Delta_{SCH}$) im wesentlichen dem während des Standardbremsvorganges vorliegendem Standardverstärkungsfaktor ($\Lambda_0$) entspricht und mit zunehmenden Gefahrenpotential kontinuierlich erhöht wird.

4. Verfahren nach einem der Ansprüche 1 bis 3,
   **dadurch gekennzeichnet, daß** eine Kombinationen von zumindest zwei Parametern zur Ermittlung des Fahrergefahrenpotentials ($\Delta_{da}$) verwendet wird.

5. Verfahren nach Anspruch 4,
   **dadurch gekennzeichnet, daß** die Parameter jeweils mit einem Gewichtungsfaktor ($g_i$) gemäß folgender Formel gewichtet sind:

$$\Delta_{da} = \sum_{i=1}^{n} |Parameter_i| \cdot g_i$$

6. Verfahren einem der Ansprüche 1 bis 5,
   **dadurch gekennzeichnet, daß** das Fahrergefahrenpotential ($\Delta_{da}$) nach folgender Formel berechnet wird:

$$\Delta_{da} = \cos\left(\frac{\dot{F}_{ped}}{\dot{F}_{ped-panic}}\right)$$

wobei $\dot{F}_{der-panic}$ der für Gefahrensituationen typischen Bremspedalkraftänderung ($\dot{F}_{ped}$) entspricht und $\Delta_{da}=1$ gilt, falls die Bremspedalkraftänderung ($\dot{F}_{ped}$) größer als $\dot{F}_{ped-panic}$ ist, und $\Delta_{da}=0$ gilt, falls $\dot{F}_{ped}$ kleiner 0 ist.

7. Verfahren nach einem der Ansprüche 1 bis 6,
   **dadurch gekennzeichnet, daß** das Fahrergefahrenpotential ($\Delta_{da}$) nach folgender Formel berechnet wird:

$$\Delta_{da} = \frac{1}{2} \cdot \left\{ 1 - \cos\left( \pi \cdot \min\left( \max\left( \frac{\dot{F}_{ped}}{1500}, 0 \right), 1 \right) \right) \right\}$$

wobei $\dot{F}_{ped}$ die Bremspedalkraftänderung darstellt.

8. Verfahren nach einem der Ansprüche 1 bis 7,
   **dadurch gekennzeichnet, daß** das Fahrsituationgefahrenpotential ($\Delta_{ds}$) auf Grundlage einer Differenz ($a_{cve}$) aus einer maximal erlaubten Beschleunigung ($a_{cva}$) und einer tatsächlichen Beschleunigung ($a_{cvo}$) ermittelt wird.

9. Verfahren nach Anspruch 8,
   **dadurch gekennzeichnet, daß** die maximal erlaubte Beschleunigung ($a_{cva}$) nach folgender Formel berechnet wird,

$$a_{cva} = -\frac{1}{2} \frac{\left(v_0 + a_{cv0} t_R\right)^2}{d_0 - v_0 t_R - \frac{1}{2} a_{cv0} t_R^2 - \frac{1}{2} \frac{\left(v_0 + \dot{d}_0\right)^2}{a_{cv0} + \ddot{d}_0}}$$

wobei $t_R$ die Reaktionszeit ist.

10. Verfahren nach Anspruch 8 oder 9
    **dadurch gekennzeichnet, daß** das Fahrsituationgefahrenpotential nach folgender Formel berechnet wird:

$$\Delta_{acve}(a_{cve}) = \frac{1}{2} \cdot \left\{ 1 - \cos\left( \pi \cdot \min\left( -\min\left( \frac{a_{cve}}{0,9 \cdot g}, 0 \right), 1 \right) \right) \right\}$$

11. Verfahren nach Anspruch 8 oder 9,

**dadurch gekennzeichnet, daß** das Fahrsituationgefahrenpotential direkt von einer maximal erlaubten Beschleunigung ($a_{cva}$) abhängt.

12. Verfahren nach Anspruch 11,
**dadurch gekennzeichnet, daß** das Fahrsituationgefahrenpotential nach folgender Formel berechnet wird:

$$\Delta_{acva}(a_{cva}) = \frac{1}{2} \cdot \left\{ 1 - \cos\left( \pi \cdot \min\left( \left( \frac{a_{cva} - a_0}{a_0 - a_m} \right), 0 \right), 1 \right) \right\}$$

wobei $a_m$ die maximal mögliche Verzögerung und $a_0$ eine Verzögerung, die 0,1 g bis 0,3 g kleiner als $a_m$ ist, sind.

13. Verfahren nach einem der Ansprüche 1 bis 12,
**dadurch gekennzeichnet, daß** die Funktion zum Berechnen des Fahrsituationgefahrenpotentials im Bereich ihrer Übergänge abgerundet ist.

14. Verfahren nach einem der Ansprüche 1 bis 13,
**dadurch gekennzeichnet, daß** die Erhöhung des Verstärkungsfaktors ($\Lambda$) nur erfolgt, wenn das Bremspedal betätigt wird.

15. Verfahren nach einem der Ansprüche 1 bis 14,
**dadurch gekennzeichnet, daß** die Erhöhung des Verstärkungsfaktors ($\Lambda$) proportional zur Bremspedalkraft ($F_{ped}$) oder einer dazu korrespondierenden Größe, daß bedeutet durch eine statische Adaption, erfolgt.

16. Verfahren nach einem der Ansprüche 1 bis 14
**dadurch gekennzeichnet, daß** die Erhöhung des Verstärkungsfaktors ($\Lambda$) proportional zur Änderung, daß heißt der ersten zeitlichen Ableitung, der Bremspedalkraft ($F_{ped}$) oder einer dazu korrespondierenden Größe, daß bedeutet durch eine dynamische Adaption, erfolgt.

17. Verfahren nach einem der Ansprüche 1, 2, 4 bis 16,
**dadurch gekennzeichnet, daß** ein einmal eingenommener Verstärkungsfaktor ($\Lambda_{ref}$) solange nicht vermindert wird, bis die Betätigung der Bremse beendet wird, daß heißt der Fuß vom Bremspedal genommen wird.

18. Verfahren nach einem der Ansprüche 8 bis 17,
**dadurch gekennzeichnet, daß** wenn das Fahrsituationgefahrenpotential größer als ein vorbestimmter Vordruckschwellwert wird und die maximal erlaubte Beschleunigung ($a_{cva}$) kleiner als 0 ist, eine Vordruckfunktion aktiviert wird, die im Bremskraftverstärker einen bestimmten Vordruck ($P_{preload}$) einstellt, der so groß bemessen ist, daß sich in den Bremsleitungen ein Bremsdruck aufbaut, der gerade nicht zur Betätigung der Bremsen genügt.

19. Verfahren nach einem der Ansprüche 1 bis 18,
**dadurch gekennzeichnet, daß** wenn das Fahrsituationgefahrenpotential ($\Delta$) größer als ein vorbestimmter Warnsignalschwellwert ist, im Fahrgastraum ein Warnsignal ausgegeben wird.

20. Verfahren nach einem der Ansprüche 1 bis 19,
**dadurch gekennzeichnet, daß** aus dem Fahrergefahrenpotential ($\Delta_{da}$) ein Sollwertverstärkungsfaktor ($\Lambda_{ref}$) berechnet wird und daß mit zunehmendem Fahrergefahrenpotential ($\Delta_{da}$) der Sollwertverstärkungsfaktor ($\Lambda_{ref}$) proportional zum Fahrergefahrenpotential ($\Delta_{da}$) erhöht wird.

21. Vorrichtung zur Durchführung des Verfahrens nach Anspruch 1, zum Verkürzen des Bremsweges eines Fahrzeuges, das einen Bremskraftverstärker aufweist, der während eines Standardbremsvorganges lediglich durch einen vom Fahrer ausgeübten Bremspedaldruck angesteuert wird und bei dem ein Gefahrenpotential ($\Delta$) ermittelt wird, das die Wahrscheinlichkeit angibt, daß das zu bremsende Fahrzeug in einen Unfall verwickelt wird,
**dadurch gekennzeichnet, daß** der Bremskraftverstärker beim Vorliegen einer kritischen Fahrsituation von einer Steuereinrichtung derart angesteuert wird, daß ein gegenüber dem Standardbremsvorgang erhöhter Verstär-

kungsfaktor ($\Lambda$) am Bremskraftverstärker eingestellt wird und daß die Erhöhung des Verstärkungsfaktors ($\Lambda$) durch die Steuereinrichtung nach Maßgabe des Gefahrenpotentials ($\Delta$) gesteuert wird, das auf Grundlage von einem Fahrergefahrenpotential ($\Delta_{da}$) und von einem Fahrsituationgefahrenpotential ($\Delta_{ds}$) ermittelt wird, wobei durch die Steuereinrichtung zur Ermittlung des Fahrergefahrenpotentials ($\Delta_{da}$) wenigstens ein der folgenden vom Fahrer beeinflußbaren Parameter verwendet wird :

- der Gaspedalweg,
- die Geschwindigkeit, mit welcher ein Fuß vom Gaspedal entfernt wird,
- die Pedalwechselzeit, die zum Wechseln vom Gaspedal zum Bremspedal benötigt wird,
- der Bremspedalweg,
- die Bremspedalgeschwindigkeit,
- der Membranweg ($s_{mem}$) einer im Bremskraftverstärker angeordneten Membran und/oder dessen Ableitungen in
- der Zeit ($\dot{s}_{mem}$),
- die an der Betätigungsstange des Bremskraftuerstärkers anliegende Kraft und/oder deren Ableitung in der Zeit
- die Bremspedalkraft *($F_{ped}$)*,
- die Bremspedalkraftänderung ($\dot{F}_{ped}$),
- die Lenkwinkeländerung, und/oder
- physische Zustände des Fahrers, wie Herzrhytmus und Augenbewegungen,

und wobei durch die Steuereinrichtung zur Ermittlung des Fahrsituationgefahrenpotential ($\Delta_{ds}$) wenigstens ein der folgenden von einer Fahrsituation bestimmten Parameter verwendet wird:

- die Fahrzeuggeschwindigkeit ($v_0$),
- die Fahrzeugbeschleunigung ($a_0$),
- den Abstand ($d_0$) zu einem vorausfahrenden Fahrzeug,
- die Relativgeschwindigkeit ($\dot{d}_0$) bzgl. eines vorausfahrenden Fahrzeuges,
- die Relativbeschleunigung ($\ddot{d}_0$) bzgl. eines vorausfahrenden Fahrzeuges, und/oder
- Radschlupfinformationen.

## Claims

1. Process for shortening the braking distance of a vehicle equipped with a brake servo unit which during a standard braking action is only triggered by a brake pedal pressure applied by the driver and wherein a danger potential ($\Delta$) is determined stating the probability that the vehicle to be braked will be involved in an accident, **characterized in that** the brake servo unit, in case of a critical driving situation, is so triggered by a control device that in comparison to the standard braking action an increased amplification factor ($\Lambda$) is set at the brake servo unit and that the increase of the amplification factor ($\Lambda$) is controlled in accordance with the danger potential ($\Delta$) that is determined on the basis of a driver danger potential ($\Delta_{da}$) and a driving situation danger potential ($\Delta_{ds}$), wherein for determining the driver danger potential ($\Delta_{da}$) at least one of the following parameters being influenceable by the driver is used:

- the accelerator pedal travel
- the speed used to remove a foot from the accelerator pedal,
- the pedal changing time required to change from the accelerator over to the brake pedal,
- the brake pedal travel,
- the brake pedal speed,
- the diaphragm travel ($s_{mem}$) of a diaphragm provided within the brake servo unit and/or its differentiations in time ($\dot{s}_{mem}$),
- the force applied to the actuating rod of the brake servo unit and/or its differentiations in time,
- the brake pedal force ($F_{ped}$),
- the change in the brake pedal force ($\dot{F}_{ped}$)
- the change in the steering angle, and/or
- physical conditions of the driver such as cardiac rate and eye movements,

and wherein for determining the danger potential ($\Delta_{ds}$) out of the driving situation at least one of the following parameters determined by a driving situation is used:

- the vehicle speed ($v_0$),
- the vehicle acceleration ($a_0$),
- the distance ($d_0$) to a vehicle driving ahead,
- the relative speed ($\dot{d}_0$) in relation to a vehicle driving ahead,
- the relative acceleration ($\ddot{d}_0$) in relation to a vehicle driving ahead, and/or
- wheel slip information.

2. Process according to claim 1,
   **characterized in that** the amplification factor ($\Lambda$) is only increased by the control device above a certain threshold value ($\Delta_{SCH}$) of the danger potential ($\Delta$)

3. Process according to claim 2,
   **characterized in that** the amplification factor ($\Lambda$) increased by the control device within the range of the threshold value ($\Delta_{SCH}$) corresponds essentially to the standard amplification factor ($\Lambda_0$) available during the standard braking action and is continuously increased as the danger potential increases.

4. Process according to one of the claims 1 to 3,
   **characterized in that** for determining the driver danger potential ($\Delta_{da}$) a combination of at least two parameters is used.

5. Process according to claim 4,
   **characterized in that** each time the parameters are weighted with a weighting factor ($g_i$) according to the following formula:

$$\Delta_{da} = \sum_{i=1}^{n} |Parameter_i| \cdot g_i$$

6. Process according to any one of claims 1 to 5,
   **characterized in that** the driver danger potential ($\Delta_{da}$) is calculated according to the following formula:

$$\Delta = \cos\left(\frac{\dot{F}_{ped}}{\dot{F}_{ped-panic}}\right),$$

wherein $\dot{F}_{ped-panic}$ corresponds to the change in the braking force ($\dot{F}_{ped}$) typical of danger situations and $\Delta_{da} = 1$ applies if the change in the braking force ($\dot{F}_{ped}$) is higher than $\dot{F}_{ped-panic}$ and $\Delta_{da} = 0$ applies if $\dot{F}_{ped}$ is lower than 0.

7. Process according to any one of claims 1 to 6,
   **characterized in that** the driver danger potential ($\Delta_{da}$) is calculated according to the following formula:

$$\Delta_{da} = \frac{1}{2} \cdot \left\{ 1 - \cos\left( \pi \cdot \min\left( \max\left( \frac{\dot{F}_{ped}}{1500}, 0 \right), 1 \right) \right) \right\}$$

wherein $\dot{F}_{ped}$ represents the change in the brake pedal force.

8. Process according to any one of claims 1 to 7,
   **characterized in that** the driving situation danger potential ($\Delta_{ds}$) is determined on the basis of a difference ($a_{cve}$) from a permitted maximum acceleration ($a_{cva}$) and an actual acceleration ($a_{cvo}$).

9.  Process according to claim 8,
    **characterized in that** the permitted maximum speed ($a_{cva}$) is calculated according to the following formula:

$$a_{cva} = -\frac{1}{2} \frac{\left(v_0 + a_{cv0}t_R\right)^2}{d_0 - v_0 t_R - \frac{1}{2}a_{cv0}t_R^2 - \frac{1}{2}\frac{\left(v_0 + \dot{d}_0\right)^2}{a_{cv0} + \ddot{d}_0}}$$

wherein time $t_R$ is the reaction time.

10. Process according to claim 8 or 9,
    **characterized in that** the driving situation danger potential is calculated according to the following formula:

$$\Delta_{acve}(a_{cve}) = \frac{1}{2} \cdot \left\{1 - \cos\left(\pi \cdot \min\left(-\min\left(\frac{a_{cve}}{0,9 \cdot g}, 0\right), 1\right)\right)\right\}$$
.

11. Process according to claim 8 or 9,
    **characterized in that** the driving situation danger potential depends directly on the permitted maximum acceleration ($a_{cva}$).

12. Process according to claim 11,
    **characterized in that** the driving situation danger potential is calculated according to the following formula:

$$\Delta_{acva}(a_{cva}) = \frac{1}{2} \cdot \left\{1 - \cos\left(\pi \cdot \min\left(\left(\frac{a_{cv0} - a_0}{a_0 - a_m}\right), 0\right), 1\right)\right\}$$

wherein time $a_m$ is the possible maximum deceleration and $a_0$ a deceleration that by 0.1 g to 0.3 g is lower than $a_m$.

13. Process according to any one of claims 1 to 12,
    **characterized in that** the function for calculating the driving situation danger potential is rounded off in the range of its transitions.

14. Process according to any one of claims 1 to 13,
    **characterized in that** the increase of the amplification factor ($\Lambda$) is only carried out when the brake pedal is activated.

15. Process according to any one of claims 1 to 14,
    **characterized in that** the increase in the amplification factor ($\Lambda$) is carried out proportionally to the brake pedal force ($F_{ped}$) or a variable corresponding to it, meaning by way of a static adaption.

16. Process according to any one of claims 1 to 14,
    **characterized in that** the increase in the amplification factor ($\Lambda$) is carried out proportionally to the change, i.e. the first differentiation in time, in the brake pedal force ($F_{ped}$) or a variable corresponding to it, meaning by way of a dynamic adaption.

**17.** Process according to any one of claims 1, 2, 4 to 16,
**characterized in that** an amplification factor ($\Lambda_{ref}$) once taken is not reduced until the activation of the brake is discontinued, i.e. the foot is taken off the brake pedal.

**18.** Process according to any one of claims 8 to 17,
**characterized in that** when the driving situation danger potential becomes higher than a predetermined inlet pressure threshold value and the permitted maximum speed ($a_{cva}$) is lower than 0, then an inlet pressure function is activated which sets a certain inlet pressure ($P_{preload}$) in the brake servo unit dimensioned so high that a braking pressure is building up in the brake pipes that is just not sufficient to activate the brakes.

**19.** Process according to any one of claims 1 to 18,
**characterized in that** when the driving situation danger potential ($\Delta$) is higher than a predetermined warning signal threshold value, a warning signal is issued in the passenger compartment.

**20.** Process according to any one of claims 1 to 19,
**characterized in that** a nominal value amplification factor ($\Lambda_{ref}$) is calculated from the driver danger potential ($\Delta_{da}$) and that with increasing driver danger potential ($\Delta_{da}$) the nominal value amplification factor ($\Lambda_{ref}$) is increased proportional to the driver danger potential ($\Delta_{da}$)

**21.** Device for implementing the process according to claim 1, for shortening the stopping distance of a vehicle equipped with a brake servo unit which during a standard braking action is only triggered by a brake pedal pressure applied by the driver and wherein a danger potential ($\Delta$) is determined stating the probability that the vehicle to be braked will be involved in an accident,
**characterized in that** the brake servo unit, in case of a critical driving situation, is so triggered by a control device that in comparison to the standard braking action an increased amplification factor ($\Lambda$) is set at the brake servo unit and that the increase of the amplification factor ($\Lambda$) by the control device is controlled in accordance with the danger potential ($\Delta$) that is determined on the basis of a driver danger potential ($\Delta_{da}$) and a driving situation danger potential ($\Delta_{ds}$), wherein caused by the control device for determining the driver danger potential ($\Delta_{da}$) at least one of the following parameters being influenceable by the driver is used:

- the accelerator pedal travel
- the speed used to remove a foot from the accelerator pedal,
- the pedal changing time required to change from the accelerator over to the brake pedal,
- the brake pedal travel,
- the brake pedal speed,
- the diaphragm travel ($s_{mem}$) of a diaphragm provided within the brake servo unit and/or its differentiations in time,
- the force applied to the actuating rod of the brake servo unit and/or its differentiations in time ($\dot{s}_{mem}$),
- the brake pedal force ($F_{ped}$),
- the change in the brake pedal force ($\dot{F}_{ped}$),
- the change in the steering angle, and/or
- physical conditions of the driver such as cardiac rate and eye movements, and wherein for determining the danger potential ($\Delta_{ds}$) out of the driving situation at least one of the following parameters determined by a driving situation is used by the control device:

- the vehicle speed ($v_0$),
- the vehicle acceleration ($a_0$),
- the distance ($d_0$) to a vehicle driving ahead,
- the relative speed ($\dot{d}_0$) in relation to a vehicle driving ahead,
- the relative acceleration ($\dot{d}_0$) in relation to a vehicle driving ahead, and/or
- wheel slip information.

**Revendications**

**1.** Procédé pour raccourcir la distance de freinage d'un véhicule qui comporte un servofrein, lequel est commandé, pendant un processus de freinage standard, uniquement par une pression sur la pédale de frein exercée par le conducteur, et pour lequel est déterminé un potentiel de risque ($\Delta$) qui indique la probabilité que le véhicule à freiner soit impliqué dans un accident,
**caractérisé en ce qu'**en présence d'une situation de conduite critique, le servofrein est commandé par un dispositif de commande de manière que soit réglé sur le servofrein un facteur d'amplification ($\Lambda$) supérieur par rapport au processus de freinage standard, et **en ce que** l'augmentation du facteur d'amplification ($\Lambda$) est commandée en fonction du potentiel de risque ($\Delta$) qui est déterminé à partir d'un potentiel de risque du conducteur ($\Delta_{da}$) et d'un potentiel de risque de la situation de conduite ($\Delta_{ds}$), au moins l'un des paramètres suivants qui peuvent être influencés par le conducteur étant utilisé pour déterminer le potentiel de risque du conducteur ($\Delta_{da}$):

- la course de la pédale d'accélérateur,

- la vitesse à laquelle un pied est éloigné de la pédale d'accélérateur,

- le temps de changement de pédale qui est nécessaire pour passer de la pédale d'accélérateur à la pédale de frein,

- la course de la pédale de frein,

- la vitesse de la pédale de frein,

- la course de la membrane ($S_{mem}$) d'une membrane disposée dans le servofrein et/ou ses dérivées dans le temps ($\dot{S}_{mem}$),

- la force qui s'applique sur la tige d'actionnement du servofrein et/ou sa dérivée dans le temps,

- la force de la pédale de frein ($F_{ped}$),

- la variation de la force de la pédale de frein ($\dot{F}_{ped}$),

- la variation de l'angle de braquage, et/ou

- des états physiques du conducteur, tels que le rythme cardiaque et les mouvements des yeux, et au moins l'un des paramètres suivants déterminés par une situation de conduite étant utilisé pour déterminer le potentiel de risque de la situation de conduite ($\Delta d_s$)

- la vitesse du véhicule ($v_0$),

- l'accélération du véhicule ($a_0$),

- la distance ($d_0$) par rapport au véhicule précédent,

- la vitesse relative ($\dot{d}_0$) par rapport au véhicule précédent,

- l'accélération relative ($\ddot{d}_0$) par rapport au véhicule précédent, et/ou

- des informations relatives au patinage des roues.

2. Procédé selon la revendication 1,
**caractérisé en ce que** le facteur d'amplification ($\Lambda$) est augmenté par le dispositif de commande uniquement au-delà d'une valeur seuil ($\Delta_{SCH}$) déterminée du potentiel de risque ($\Delta$).

3. Procédé selon la revendication 2,
**caractérisé en ce que** le facteur d'amplification ($\Lambda$) augmenté par le dispositif de commande correspond, dans le domaine de la valeur seuil ($\Delta_{SCH}$), essentiellement au facteur d'amplification standard ($\Lambda_0$) existant pendant le processus de freinage standard, et est augmenté en continu lorsqu'augmente le potentiel de risque.

4. Procédé selon l'une des revendications 1 à 3,
**caractérisé en ce qu'**on utilise une combinaison d'au moins deux paramètres pour déterminer le potentiel de risque du conducteur ($\Delta_{da}$).

**5.** Procédé selon la revendication 4,

$$\Delta_{da} = \sum_{i=1}^{n} \left| Parameter_i \right| \cdot g_i$$

**caractérisé en ce que** les paramètres sont pondérés chacun avec un facteur de pondération ($g_i$) selon la formule suivante : igi

**6.** Procédé selon l'une des revendications 1 à 5,
**caractérisé en ce que** le potentiel de risque du conducteur ($\Delta_{da}$) est calculé selon la formule suivante :

$$\Delta_{da} = \cos\left( \frac{\dot{F}_{ped}}{\dot{F}_{ped-panic}} \right)$$

dans laquelle $\dot{F}_{ped-panic}$ correspond à la variation de la force de la pédale de frein ($\dot{F}_{ped}$) caractéristique de situations de risque, et $\Delta_{da}=1$, dans le cas où la variation de la force de la pédale de frein ($F_{ped}$) est supérieure à $\dot{F}_{ped-panic}$ et $\Delta_{da} = 0$ dans le cas où $\dot{F}_{ped}$ est inférieur à 0.

**7.** Procédé selon l'une des revendications 1 à 6, **caractérisé en ce que** le potentiel de risque du conducteur ($\Delta_{da}$) est calculé selon la formule suivante:

$$\Delta_{da} = \frac{1}{2} \cdot \left\{ 1 - \cos\left( \pi \cdot \min\left( \max\left( \frac{\dot{F}_{ped}}{1500}, 0 \right), 1 \right) \right) \right\}$$

où $\dot{F}_{ped}$ est la variation de la force sur la pédale de frein.

**8.** Procédé selon l'une des revendications 1 à 7,
**caractérisé en ce que** le potentiel de risque de la situation de conduite ($\Delta_{ds}$) est déterminé à partir d'une différence ($a_{cve}$) entre une accélération maximale autorisée ($a_{cva}$) et une accélération effective ($a_{cvo}$).

**9.** Procédé selon la revendication 8,
**caractérisé en ce que** l'accélération maximale autorisée ($a_{cva}$) est calculée d'après la formule suivante :

$$a_{cvo} = -\frac{1}{2} \frac{(v_0 + a_{cv0} t_R)^2}{d_0 - v_0 t_R - \frac{1}{2} a_{cv0} t_R^2 - \frac{1}{2} \frac{(v_0 + \dot{d}_0)^2}{a_{cv0} + \ddot{d}_0}}$$

où $t_R$ est le temps de réaction.

**10.** Procédé selon la revendication 8 ou 9,
**caractérisé en ce que** le potentiel de risque de la situation de conduite est calculé selon la formule suivante:

$$\Delta_{acve}(a_{cve}) = \frac{1}{2} \cdot \left\{ 1 - \cos\left( \pi \cdot \min\left( -\min\left( \frac{a_{cve}}{0,9 \cdot g}, 0 \right), 1 \right) \right) \right\}$$

**11.** Procédé selon la revendication 8 ou 9,
**caractérisé en ce que** le potentiel de risque de la situation de conduite dépend directement d'une accélération maximale autorisée ($a_{cva}$).

**12.** Procédé selon la revendication 11,
**caractérisé en ce que** le potentiel de risque de la situation de conduite est calculé d'après la formule suivante :

$$\Delta_{acva}(a_{cva}) = \frac{1}{2} \cdot \left\{ 1 - \cos\left( \pi \cdot \min\left( \left( \frac{a_{cva} - a_0}{a_0 - a_m} \right), 0 \right), 1 \right) \right\}$$

où $a_m$ est le ralentissement maximal possible et $a_o$ un ralentissement qui est inférieur de 0,1 g à 0, 3 g à $a_m$.

**13.** Procédé selon l'une des revendications 1 à 12,
**caractérisé en ce que** la fonction de calcul du potentiel de risque de la situation de conduite est arrondie au voisinage de ses transitions.

**14.** Procédé selon l'une des revendications 1 à 13,
**caractérisé en ce que** l'augmentation du facteur d'amplification ($\Lambda$) ne s'effectue que lorsque la pédale de frein est actionnée.

**15.** Procédé selon l'une des revendications 1 à 14,
**caractérisé en ce que** l'augmentation du facteur d'amplification ($\Lambda$) s'effectue proportionnellement à la force de la pédale de frein ($F_{ped}$) ou à une grandeur correspondant à celle-ci, c'est-à-dire par une adaptation statique.

**16.** Procédé selon l'une des revendications 1 à 14,
**caractérisé en ce que** l'augmentation du facteur d'amplification ($\Lambda$) s'effectue proportionnellement à la variation, c'est-à-dire à la première dérivée dans le temps de la force de la pédale de frein ($F_{ped}$) ou grandeur correspondant à celle-ci, c'est-à-dire par une adaptation dynamique.

**17.** Procédé selon l'une des revendications 1, 2, 4 à 16,
**caractérisé en ce qu'**un facteur d'amplification ($\Lambda_{ref}$) adopté une fois n'est pas réduit aussi longtemps que l'actionnement du frein n'est pas terminé, c'est-à-dire aussi longtemps que le pied n'est pas retiré de la pédale de frein.

**18.** Procédé selon l'une des revendications 8 à 17,
**caractérisé en ce que** dans le cas où le potentiel de risque de la situation de conduite est supérieur à une valeur seuil prédéterminée de la pression initiale et l'accélération maximale admissible ($a_{cva}$) est inférieure à zéro, une fonction de pression initiale est activée qui règle dans le servofrein une pression initiale déterminée ($P_{preload}$) qui est suffisamment grande pour que dans le circuit de freinage se constitue une pression de freinage qui ne suffit pas pour actionner les freins.

**19.** Procédé selon l'une des revendications 1 à 18,
**caractérisé en ce que** dans le cas où le potentiel de risque de la situation de conduite ($\Delta$) est supérieur à une valeur seuil prédéterminée du signal d'avertissement, un signal d'avertissement est délivré dans l'habitacle.

**20.** Procédé selon l'une des revendications 1 à 19,
**caractérisé en ce qu'**on calcule un facteur d'amplification de consigne ($\Lambda_{ref}$) à partir du potentiel de risque du conducteur ($\Delta_{da}$) et **en ce que** dans le cas où le potentiel de risque du conducteur ($\Delta_{da}$) augmente, le facteur d'amplification de consigne ($\Lambda_{ref}$) est relevé proportionnellement au potentiel du risque du conducteur ($\Delta_{da}$).

**21.** Dispositif pour la mise en oeuvre du procédé selon la revendication 1, pour raccourcir la distance de freinage d'un véhicule qui comporte un servofrein, lequel est commandé, pendant un processus de freinage standard, uniquement par une pression sur la pédale de frein exercée par le conducteur, et pour lequel est déterminé un potentiel de risque ($\Delta$) qui indique la probabilité que le véhicule à freiner soit impliqué dans un accident,
**caractérisé en ce qu'**en présence d'une situation de conduite critique, le servofrein est commandé par un dispositif de commande de manière que soit réglé sur le servofrein un facteur d'amplification ($\Lambda$) supérieur par rapport au processus de freinage standard, et **en ce que** l'augmentation du facteur d'amplification ($\Lambda$) est commandée par le dispositif de commande en fonction du potentiel de risque ($\Delta$) qui est déterminé à partir d'un potentiel de risque du conducteur ($\Delta_{da}$) et d'un potentiel de risque de la situation de conduite ($\Delta_{ds}$), au moins l'un des paramètres suivants qui peuvent être influencés par le conducteur étant utilisé pour déterminer, par le dispositif de commande, le potentiel de risque du conducteur ($\Delta_{da}$):

- la course de la pédale d'accélérateur,

- la vitesse à laquelle un pied est éloigné de la pédale d'accélérateur,

- le temps de changement de pédale qui est nécessaire pour passer de la pédale d'accélérateur à la pédale de frein,

- la course de la pédale de frein,

- la vitesse de la pédale de frein,

- la course de la membrane ($S_{mem}$) d'une membrane disposée dans le servofrein et/ou ses dérivées dans le temps ($\dot{S}_{mem}$),

- la force qui s'applique sur la tige d'actionnement du servofrein et/ou sa dérivée dans le temps,

- la force de la pédale de frein *($F_{ped}$)*,

- la variation de la force de la pédale de frein ($\dot{F}_{ped}$),

- la variation de l'angle de braquage, et/ou

- des états physiques du conducteur, tels que le rythme cardiaque et les mouvements des yeux,

et au moins l'un des paramètres suivants déterminés par une situation de conduite étant utilisé pour déterminer, par le dispositif de commande, le potentiel de risque de la situation de conduite :

- la vitesse du véhicule ($v_0$),

- l'accélération du véhicule ($a_0$),

- la distance ($d_0$) par rapport au véhicule précédent,

- la vitesse relative ($d_0$) par rapport au véhicule précédent,

- l'accélération relative ($d_0$) par rapport au véhicule précédent, et/ou

- des informations relatives au patinage des roues.

Fig.1

Fig.2

Fig. 3

Fig. 4

## Fig. 5

## Fig. 6

# Fig. 7

$$\dot{F}_{ped} \rightarrow \boxed{\Delta_{da} = f(\dot{F}_{ped})} \rightarrow \Delta_{da} \rightarrow \boxed{\Lambda_{ref}(\Delta_{da})} \rightarrow \Lambda_{ref}$$

$p_{TMC}$

$F_{ped}$

$\boxed{p_{ref}(p_{TMC}, \Lambda_{ref}, F_{ped})} \rightarrow p_{ref}$

# Fig. 8

$\Lambda_{ref}$

$\Lambda_{max}$

$\Lambda_0$

$0 \quad \Delta_{SCH} \quad 1 \quad \Delta_{da}[-]$

Fig. 9

Fig. 10

Fig. 11